# EUROPEAN PATENT APPLICATION

(11) **EP 1 302 511 A2**
(43) Date of publication of application: **16.04.2003**
(21) Application number: 02023230.2
(22) Date of filing: 16.10.2002
(51) Int. Cl.: C08L 83/04

(54) **Composition for silicone rubber hose, hose production method employing the composition, and rubber hose produced by the method**

(30) Priority: 16.10.2001 JP 2001318152
(71) Applicant: Tokai Rubber Industries, Ltd., Komaki-shi, Aichi-ken, 485-8550 (JP)
(72) Inventor: Noda, Masashi, Komaki-shi, Aichi-ken, 485-8550 (JP); Kanbe, Shinobu, Komaki-shi, Aichi-ken, 485-8550 (JP)
(74) Representative: Frankland, Nigel Howard

(57) **Abstract**

There are provided a composition for a silicone rubber hose, which can be hollow-extruded without the use of a mandrel, a hose production method employing such a composition, and a rubber hose produced by such a method. The composition comprises a dispersion having: (A) a silicone rubber as a matrix component; and (B) a material dispersed as a dispersed component in the matrix component, and has a dispersion structure after being kneaded for production of a rubber hose. The composition is kneaded and extruded without the use of the mandrel to produce an uncured hose, which is in turn vulcanized. Thus, the intended hose is obtained.

## Description

### BACKGROUND OF THE INVENTION

### Field of the Invention

The present invention relates to a composition for a silicone rubber hose to be used as an automotive hose. The invention further relates to a hose production method employing such a composition, and to a rubber hose produced by such a method.

### Description of the Art

Acryl rubbers and silicone rubbers are conventionally employed as materials for automotive hoses such as turbo air hoses, hoses for fuel cell powered cars (methanol fuel hoses and hydrogen fuel hoses), hoses for engine cooling systems (radiator hoses and heater hoses) and coolant transporting hoses for coolers. Particularly, the silicone rubbers are preferred because of their high heat resistance.

However, the silicone rubber generally has a low viscosity in an unvulcanized state. Where a hose is produced by hollow extrusion of the silicone rubber without the use of a mandrel, for example, the hose is liable to be flattened and collapsed. Therefore, it is difficult to produce the silicone rubber hose without the use of the mandrel. In addition, the silicone rubber hose has difficulty in retaining its inner hollow shape and, hence, is liable to be flattened and collapsed when the mandrel is withdrawn from the hose. Therefore, special consideration is required for transferring the hose to the subsequent bending process after the mandrel is withdrawn from the hose.

In view of the foregoing, it is an object of the present invention to provide a composition for a silicone rubber hose which can be hollow-extruded without the use of a mandrel, a hose production method employing such a composition, and a rubber hose produced by such a method.

### SUMMARY OF THE INVENTION

In accordance with a first aspect of the present invention, there is provided a rubber composition for a silicone rubber hose, the rubber composition comprising a dispersion having: (A) a silicone rubber as a matrix component; and (B) a material dispersed as a dispersed component in the matrix component. The dispersion may be produced by kneading the components together.

In accordance with a second aspect of the present invention, there is provided a hose production method, which comprises the steps of: kneading the aforesaid rubber composition; extruding the rubber composition without the use of a mandrel to produce an uncured hose; and vulcanizing the uncured hose.

Preferably the method comprises the additional step of providing a further layer on the hose, as an inner layer or as an outer layer, in the form of a layer of rubber or resin or a reinforcement layer of braided aramide filaments or PET filaments.

conveniently the additional step comprises the step of providing a fluororubber layer as an innermost layer of the hose.

According to another aspect of this invention there is provided silicone rubber hose formed from a dispersion having (A) a silicone rubber as a matrix component and having (B) a material dispersed as a dispersed component in the matrix component.

Preferably the dispersed component (B) is at least one material selected from the group consisting of acrylic rubbers, fluororubbers and fluororesins.

Conveniently the hose is provided with an innermost layer of fluororubber.

The inventors of the present invention conducted a series of studies on how to impart the silicone rubber with an excellent formability while taking advantage of the excellent heat resistance of the silicone rubber. As a result, the inventors found that a silicone rubber composition comprising a dispersion having a silicone rubber as a matrix or a "sea" component and a specific material dispersed as a dispersed component (or an "island" component in the matrix or the "sea" component) and having a dispersion (or a "sea-island" structure) after being kneaded for production of a hose is excellent in heat resistance and formability. The inventors further found that the silicone rubber composition has a higher viscosity in an unvulcanized state. Even if the silicone rubber composition is hollow-extruded without the use of a mandrel, the resulting hose is excellent in retention of its inner hollow shape and, therefore, is less liable to be flattened and collapsed. Thus, the present invention has been attained to achieve the aforesaid object.

### DESCRIPTION OF THE PREFERRED EMBODIMENTS

The present invention will hereinafter be described by way of embodiments thereof.

In the described embodiments of the invention, a composition for a silicone rubber hose comprises a dispersion having (A) a silicone rubber as a matrix (or a "sea" component); and (B) a material dispersed as a dispersed or as an "island" component in the matrix or the "sea" component, and has a dispersion or a "sea-island" structure after being kneaded for production of the hose.

Conventionally known silicone rubbers are usable as the silicone rubber (A). Examples of the silicone rubber include millable silicone rubbers, silicone rubbers of high temperature vulcanizable type (HTV), silicone rubbers of room temperature vulcanizable type (RTV) and liquid silicone rubbers of low temperature vulcanizable type (LTV), among which the millable silicone rubbers are particularly preferred.

The material (B) is not particularly limited, as long as it can be dispersed as the "island" component in the "sea" component of the silicone rubber. Preferred examples of the material include acrylic rubbers, fluororubbers and fluororesins, which can stably be dispersed in the silicone rubber to form a "sea-island" structure in the silicone rubber composition. Thus, the silicone rubber composition has excellent heat resistance and formability.

In the inventive silicone rubber composition, the silicone rubber (A) and the material (B) are preferably present in a weight ratio of (A)/(B)=95/5 to 70/30, more preferably (A)/(B)=90/10 to 80/20. If the proportion of the silicone rubber (A) is greater than 95%, the resulting composition fails to have a desired viscosity in an unvulcanized state. Where such a composition is hollow-extruded into a hose without the use of a mandrel, the hose is liable to be flattened and collapsed. On the other hand, if the proportion of the silicone rubber (A) is smaller than 70%, the resulting composition tends to have a roughened surface (a hose produced by extrusion of such a composition tends to have a roughened surface), and poorer physical properties (e.g., tensile strength and heat resistance).

As described above, the inventive silicone rubber composition has a "sea-island" structure in which elements or "islands" of the material (B) are dispersed in the sea of the silicone rubber (A) after being kneaded for the production of the rubber hose. The "islands" preferably have an average diameter of 0.1 to 2µm, more preferably 0.1 to 1.0µm. If the average diameter of the "islands" is smaller than 0.1µm, the resulting composition fails to have a desired viscosity in the unvulcanized state. Where such a composition is hollow-extruded into a hose without the use of the mandrel, the hose is liable to be flattened and collapsed. On the other hand, if the average diameter of the "islands" is greater than 2µm, the resulting composition tends to have a roughened surface (a hose produced by extrusion of such a composition tends to have a roughened surface), and poorer physical properties (e.g., tensile strength and heat resistance). The average diameter of the "islands" is determined by any of conventionally known measuring methods such as microphotographic methods employing a scanning electron microscope (SEM), a scanning probe microscope (SPM) and a stereomicroscope. where the configuration of an island is not perfectly spherical but elliptically spherical (elliptical in section) with variations in diameter, a simple average of maximum and minimum diameters of the island is employed as the average diameter of the "island".

The preferred silicone rubber composition preferably has a Mooney viscosity of 60 to 120, more preferably 60 to 100, at 50°C in the unvulcanized state after being kneaded for the production of the rubber hose. If the Mooney viscosity of the composition at 50 ° C in the unvulcanized state is lower than 60, a hose produced by hollow-extrusion of the composition without the use of the mandrel is liable to be flattened and collapsed. If the Mooney viscosity of the composition at 50°C in the unvulcanized state is higher than 120, the extrusion of the composition is difficult.

A preferred silicone rubber hose according to the present invention is produced, for example, in the following manner. The aforesaid silicone rubber composition is first kneaded by means of a kneading machine such as a blender or a kneader, and then hollow-extruded without the use of the mandrel to produce an uncured hose. The uncured hose is wound up around a dish or passed through a bending mandrel, and vulcanized under predetermined conditions (e.g., at a temperature of 160 to 200°C for 10 to 120 minutes). Thus, an intended silicone rubber hose is obtained. It is preferred to prepare the silicone rubber composition immediately before the extrusion. If the prepared rubber composition is allowed to stand for a long period before the extrusion, the island component is liable to separate or aggregate in the rubber composition, so that the rubber composition fails to have the "sea-island" structure in which the "island" component is properly dispersed in the "sea" component. Since the hose is produced without the use of the mandrel in this hose production method, a mandrel withdrawing operation is obviated. Therefore, a production process is advantageously simplified, and easily adapted for production of a bent hose.

The silicone rubber hose produced by the hose production method preferably has an inner diameter of about 30 to about 100mm and a thickness of about 2 to about 10mm. More preferably, the silicone rubber hose has an inner diameter of about 30 to about 70mm and a thickness of about 3 to about 5mm.

A layer of a rubber or a resin or a reinforcement layer of braided aramide filaments or PET filaments may be provided on the inner or outer periphery of the silicone rubber hose, forming an innermost or outermost layer on the hose. Particularly, where the silicone rubber hose is employed as a turbo air hose or the like which may suffer from oil oozing, a fluororubber layer impermeable to oil is preferably provided as an innermost layer on the inner periphery of the silicone rubber hose. The fluororubber layer preferably has a thickness of smaller than 0.25mm so as not to reduce the flexibility of the entire hose.

The silicone rubber hose thus obtained is excellent in heat resistance and low in production costs. The hose can advantageously be employed as an automotive hose such as a turbo air hose, a hose for a fuel cell powered car (a methanol fuel hose or a hydrogen fuel hose) , a hose for an engine cooling system (a radiator hose or a heater hose), or a coolant transporting hose for a cooler.

Examples and a comparative example will hereinafter be described.

### Example 1

### Preparation of material for rubber hose

First, 85 parts by weight (hereinafter referred to simply as "parts") of a silicone rubber (TSE2323-7U available from GE Toshiba Silicone Co., Ltd.) and 15 parts of a fluororubber (VITON GBL900 available from E. I. Du Pont de Nemours and Company) were blended, and kneaded by means of a kneading machine (5L kneader) until the average diameter of "islands" of the fluororubber dispersed in the silicone rubber became 1.5µm. The silicone rubber composition thus prepared was employed as a material for a rubber hose. The silicone rubber composition had a Mooney viscosity of 64 at 50 °C in an unvulcanized state.

### Production of hose

Without the use of a mandrel, the silicone rubber composition was hollow-extruded to produce an uncured single-layer hose, which was in turn wound up around a dish. The uncured hose was vulcanized at 160°C for 45 minutes. Thus, an intended long hose was obtained. The hose had an inner diameter of 80mm, a thickness of 5mm and a length of 200mm.

### Example 2

A silicone rubber composition was prepared by blending and kneading 85 parts of the silicone rubber and 15 parts of an acrylic rubber (ER5300P available from Denkikagaku Kogyo K.K.) by means of a kneading machine (5L kneader) until the average diameter of "islands" of the acrylic rubber dispersed in the silicone rubber became 1.5µm. The silicone rubber composition thus prepared had a Mooney viscosity of 70 at 50 ° C in an unvulcanized state. By employing the silicone rubber composition, a long hose was produced in the same manner as in Example 1.

### Example 3

A silicone rubber composition was prepared by blending and kneading 85 parts of the silicone rubber and 15 parts of a fluororesin (KF#850 available from Kureha Kagaku Kogyo K.K.) by means of a kneading machine (5L kneader) until the average diameter of "islands" of the fluororesin dispersed in the silicone rubber became 1.5µm. The silicone rubber composition thus prepared had a Mooney viscosity of 66 at 50°C in an unvulcanized state. By employing the silicone rubber composition, a long hose was produced in the same manner as in Example 1.

### Example 4

A silicone rubber composition was prepared by blending and kneading 70 parts of the silicone rubber and 30 parts of the fluororubber by means of a kneading machine (5L kneader) until the average diameter of "islands" of the fluororubber dispersed in the silicone rubber became 1.5µm. The silicone rubber composition thus prepared had a Mooney viscosity of 70 at 50 ° C in an unvulcanized state. By employing the silicone rubber composition, a long hose was produced in the same manner as in Example 1.

### Example 5

A silicone rubber composition was prepared by blending and kneading 85 parts of the silicone rubber and 15 parts of the fluororubber by means of a kneading machine (5L kneader) until the average diameter of "islands" of the fluororubber dispersed in the silicone rubber became 5µm. The silicone rubber composition thus prepared had a Mooney viscosity of 72 at 50°C in an unvulcanized state. By employing the silicone rubber composition, a long hose was produced in the same manner as in Example 1.

### Example 6

A silicone rubber composition was prepared by blending and kneading 70 parts of the silicone rubber and 30 parts of the acrylic rubber by means of a kneading machine (5L kneader) until the average diameter of "islands" of the acrylic rubber dispersed in the silicone rubber became 1.5µm. The silicone rubber composition thus prepared had a Mooney viscosity of 80 at 50°C in an unvulcanized state. By employing the silicone rubber composition, a long hose was produced in the same manner as in Example 1.

### Example 7

A silicone rubber composition was prepared by blending and kneading 85 parts of the silicone rubber and 15 parts of the acrylic rubber by means of a kneading machine (5L kneader) until the average diameter of "islands" of the acrylic rubber dispersed in the silicone rubber became 5µm. The silicone rubber composition thus prepared had a Mooney viscosity of 76 at 50 ° C in an unvulcanized state. By employing the silicone rubber composition, a long hose was produced in the same manner as in Example 1.

### Example 8

A silicone rubber composition was prepared by blending and kneading 70 parts of the silicone rubber and 30 parts of the fluororesin by means of a kneading machine (5L kneader) until the average diameter of "islands" of the fluororesin dispersed in the silicone rubber became 1.5µm. The silicone rubber composition thus prepared had a Mooney viscosity of 72 at 50°C in an unvulcanized state. By employing the silicone rubber composition, a long hose was produced in the same manner as in Example 1.

### Example 9

A silicone rubber composition was prepared by blending and kneading 85 parts of the silicone rubber and 15 parts of the fluororesin by means of a kneading machine (5L kneader) until the average diameter of "islands" of the fluororesin dispersed in the silicone rubber became 5µm. The silicone rubber composition thus prepared had a Mooney viscosity of 90 at 50 ° C in an unvulcanized state. By employing the silicone rubber composition, a long hose was produced in the same manner as in Example 1.

### Comparative Example

A resin mandrel (having a diameter of 80mm) with a releasing agent applied on a surface thereof was prepared. A silicone rubber (having a Mooney viscosity of 45 at 50°C in an unvulcanized state) was extruded around the mandrel to produce an uncured hose. The uncured hose was vulcanized at 160 ° C for 45 minutes, and then the mandrel was withdrawn from the hose. Thus, an intended silicone rubber hose was obtained. The hose had an inner diameter of 80mm, a thickness of 5mm and a length of 200mm.

The properties of the hoses of the examples and the comparative example thus obtained were evaluated in the following manner. The results are shown in Tables 1 and 2.

### Tensile strength and elongation

The tensile strength (TB) and the elongation (EB) were measured in conformity with Japanese Industrial Standard K 6251 (hereinafter Japanese Industrial Standard abbreviated as JIS).

### Tear strength

The tear strength (Tr) was measured in conformity with the tear test (with a B-type test strip) specified in JIS K 6252.

### Thermal aging test

After a 1000-hour thermal aging test was performed at 200 ° C, the tensile strength and the elongation were measured in the aforesaid manner.

### Hollow-extrudability

In Tables 1 and 2, a symbol ○ indicates that the hollow extrusion was properly performed without the use of the mandrel, and a symbol × indicates that a hose was flattened and collapsed during the hollow extrusion without the use of the mandrel.

### Surface of extrusion

The surface roughness of a hose obtained by the extrusion was visually evaluated. In Tables 1 and 2, symbols ○, Δ and × indicate that the surface roughness of the hose increases in this order.

**Table 1**

| | Example | | | | | |
|---|---|---|---|---|---|---|
| | 1 | 2 | 3 | 4 | 5 | 6 |
| Initial | | | | | | |
| TB (MPa) | 9.1 | 8.2 | 9.6 | 8.6 | 7.6 | 8.3 |
| EB (%) | 410 | 420 | 420 | 460 | 330 | 500 |
| Tr (N/mm) | 28.9 | 22.3 | 25.9 | 25.5 | 21.6 | 19.3 |

| After thermal aging | | | | | | |
|---|---|---|---|---|---|---|
| TB (MPa) | 5.6 | 4.6 | 6.1 | 5.4 | 6.1 | 4.1 |
| EB (%) | 160 | 80 | 170 | 200 | 170 | 40 |
| Hollow extrudability | ○ | ○ | ○ | ○ | ○ | ○ |
| Surface of extrusion | ○ | ○ | ○ | Δ | × | Δ |

**Table 2**

| | Example | | | Comparative |
|---|---|---|---|---|
| | 7 | 8 | 9 | Example |
| Initial | | | | |
| TB (MPa) | 8.0 | 8.3 | 8.1 | 11.7 |
| EB (%) | 410 | 390 | 380 | 330 |
| Tr (N/mm) | 20.3 | 16.3 | 19.3 | 34.5 |

| After thermal aging | | | | |
|---|---|---|---|---|
| TB (MPa) | 5.1 | 5.8 | 6.7 | 7.5 |
| EB (%) | 90 | 170 | 160 | 140 |
| Hollow extrudability | ○ | ○ | ○ | × |
| Surface of extrusion | × | Δ | × | ○ |

As can be understood from the results shown in Tables 1 and 2, the hoses of the examples were properly produced by the hollow extrusion without the use of the mandrel. on the contrary, the hose of the comparative example was flattened and collapsed during the hollow extrusion without the use of the mandrel.

### Example 10

A rubber hose was produced in the same manner as in Example 1, and dipped in a fluororubber solution (prepared by dissolving 100 parts of a fluororubber in 500 parts of toluene) for formation of a 0.24-mm thick fluororubber layer on the inner periphery of the hose. The hose thus produced was used as an air hose for an engine provided with a turbo charger. As a result, it was confirmed that the hose was excellent in flexibility and impermeability to oil.

In embodiments of the present invention, the silicone rubber composition has a dispersion or a "sea-island" structure in which the "islands" of the material (B) are dispersed in the "sea" of the silicone rubber (A), after being kneaded for the production of the hose. Therefore, the silicone rubber composition is excellent in heat resistance, and has a higher viscosity in an unvulcanized state than the silicone rubber alone. Hence, the silicone rubber composition is excellent in formability. With the excellent formability, the silicone rubber composition can be hollow-extruded without the use of the mandrel. Therefore, the production process can be simplified, whereby the production costs can correspondingly be reduced. Without the need for the mandrel, the production process can easily be adapted for production of a bent hose. Therefore, the rubber hose thus produced is excellent in heat resistance and pressure resistance.

The features disclosed in the foregoing description and in the claims may, both separately and in any combination thereof, be material for realising the invention in diverse forms thereof.

## Claims

1. A rubber composition for a silicone rubber hose, comprising a dispersion having: (A) a silicone rubber as a matrix component; and (B) a material dispersed as an dispersed component in the matrix component.

2. A rubber composition according to claim 1, wherein elements of the material (B) dispersed in the matrix component have an average diameter of 0.1 to 2µm.

3. A rubber composition according to claim 1 or claim 2, wherein the silicone rubber (A) and the material (B) are present in a weight ratio of (A)/(B)=95/5 to 70/30.

4. A rubber composition according to any of claim 1 to claim 3, wherein the material (B) is at least one selected from the group consisting of acrylic rubbers, fluororubbers and fluororesins.

5. A rubber composition according to any of claim 1 to claim 4, which has a Mooney viscosity of 60 to 120 at 50 ° C in an unvulcanized state after being kneaded for the production of the rubber hose.

6. A hose production method comprising the steps of: kneading a rubber composition according to any of claim 1 to claim 5; extruding the rubber composition without the use of a mandrel to produce an uncured hose; and vulcanizing the uncured hose.

7. A hose production method according to claim 6 comprising the additional step of providing a further layer on the hose, as an inner layer or as an outer layer, in the form of a layer of rubber or resin or a reinforcement layer of braided aramide filaments or PET filaments.

8. A hose production method according to claim 7 wherein the additional step comprises the step of providing a fluororubber layer as an innermost layer of the hose.

9. A silicone rubber hose formed from a dispersion having (A) a silicone rubber as a matrix component and having (B) a material dispersed as a dispersed component in the matrix component.

10. A silicone rubber hose according to claim 9 wherein the dispersed component (B) is at least one material selected from the group consisting of acrylic rubbers, fluororubbers and fluororesins.

11. A silicone rubber hose according to claim 9 or claim 10 wherein the hose is provided with an innermost layer of fluororubber.
